# FASCICULE DE BREVET EUROPEEN

(11) **EP 1 845 016 B1**
(45) Date de publication et mention de la délivrance du brevet: **03.06.2009**
(21) Numéro de dépôt: 07290378.4
(22) Date de dépôt: 30.03.2007
(51) Int. Cl.: B64C 25/50

(54) **Atterrisseur comportant plusieurs actionneurs électromécaniques d'orientation**
Fahrwerk umfassend mehrere elektromechanische Ausrichtungsstellglieder
Landing gear comprising several electromechanical direction actuators

(30) Priorité: 12.04.2006 FR 0603229
(43) Date de publication de la demande: 17.10.2007
(73) Titulaire: MESSIER-BUGATTI, 78140 Vélizy Villacoublay (FR)
(72) Inventeur: Bucheton, Daniel, 78150 Le Chesnay (FR); Leynaert, François-Noel, 95160 Montmorency (FR); Quenerchdu, Marc, 75020 Paris (FR)
(74) Mandataire: Parzy, Benjamin Alain

(56) Documents cités:
- FR-A- 894 049
- FR-A1- 2 677 951
- JP-A- 3 016 896
- US-A- 2 906 143
- US-A- 5 028 828
- US-A1- 2006 006 824

## Description

L'invention concerne un atterrisseur d'aéronef comportant plusieurs actionneurs électromécaniques d'orientation.

Un tel atterrisseur est proposé dans le document FR 2677951.

### ARRIERE-PLAN DE L'INVENTION

On connaît des atterrisseurs d'aéronef comportant une partie inférieure orientable et un organe d'orientation adapté à faire tourner la partie inférieure orientable en réponse à un ordre d'orientation.

L'organe d'orientation comporte souvent un ou deux vérins qui agissent sur la partie inférieure orientable. On connaît d'autres type d'organe d'orientation, par exemple à crémaillère.

Dans le domaine des aéronefs navals embarqués, il est connu d'utiliser des organes d'orientation comportant un actionneur à moteur hydraulique coopérant avec une roue dentée solidaire de la partie inférieure orientable de l'atterrisseur.

Dans le domaine des aéronefs légers, il est connu d'utiliser un organe d'orientation comportant un actionneur à moteur électrique coopérant avec une roue dentée solidaire de la partie inférieure orientable de l'atterrisseur.

Cependant, si l'organe d'actionnement défaille, la commande d'orientation est totalement perdue, et il n'est plus possible de diriger l'aéronef de façon autonome autrement que par du freinage différentiel ou des poussées moteur dissymétriques.

### OBJET DE L'INVENTION

L'invention vise à améliorer la commande d'orientation, en permettant de nouvelles possibilités d'utilisation.

### BREVE DESCRIPTION DE L'INVENTION

En vue de la réalisation de ce but, on propose un atterrisseur d'aéronef comportant une partie inférieure orientable et un organe d'orientation adapté à faire tourner la partie inférieure orientable en réponse à un ordre d'orientation, dans lequel, conformément à l'invention, l'organe d'orientation comporte une pluralité d'actionneurs électromécaniques d'orientation comportant chacun un moteur électrique d'orientation et disposés sur l'atterrisseur pour coopérer tous simultanément avec la partie inférieure orientable en vue d'en provoquer son orientation, chacun des actionneurs électromécaniques d'orientation comportant des moyens d'accouplement commandables pour placer sélectivement l'actionneur :
- soit dans un état accouplé avec la partie inférieure orientable dans lequel le moteur électrique de l'actionneur est apte à faire tourner la partie inférieure orientable;
- soit dans un état désaccouplé avec la partie inférieure orientable dans lequel le moteur électrique de l'actionneur est isolé de la partie inférieure orientable.

Ainsi, si l'un des actionneurs tombe en panne, celui-ci est désaccouplé et l'orientation peut toujours être assurée par les actionneurs valides.

L'aéronef peut alors être autorisé à décoller d'un aéroport si un actionneur de rechange n'est pas disponible sur l'aéroport, ce qui contribue à faciliter l'exploitation de l'aéronef.

### BREVE DESCRIPTION DES DESSINS

L'invention sera mieux comprise à la lumière de la description qui suit en référence aux figures des dessins annexés parmi lesquelles :
- la figure 1 est une vue schématique du bas d'un atterrisseur équipé d'actionneurs électromécaniques d'orientation selon l'invention ;
- la figure 2 est une vue de dessus de l'atterrisseur de la figure 1 ;
- la figure 3 est une vue en coupe d'un actionneur électromécanique d'orientation selon la ligne III-III de la figure 2, l'amortisseur ayant été ôté, l'organe d'accouplement étant illustré en position d'accouplement ;
- la figure 4 est une vue partielle en coupe selon la ligne IV-IV de la figure 3 ;
- la figure 5 est une vue en coupe selon la ligne V-V de la figure 3 d'une partie de l'organe d'accouplement dans l'état accouplé ;
- la figure 6 est une vue en coupe selon la ligne VI-VI de la figure 7 ;
- la figure 7 est une vue en coupe analogue à celle de la figure 3 montrant l'organe d'accouplement en position désaccouplée ;
- la figure 8 est une vue en coupe analogue à celle de la figure 3 d'une variante de réalisation.

### DESCRIPTION DETAILLEE DE L'INVENTION

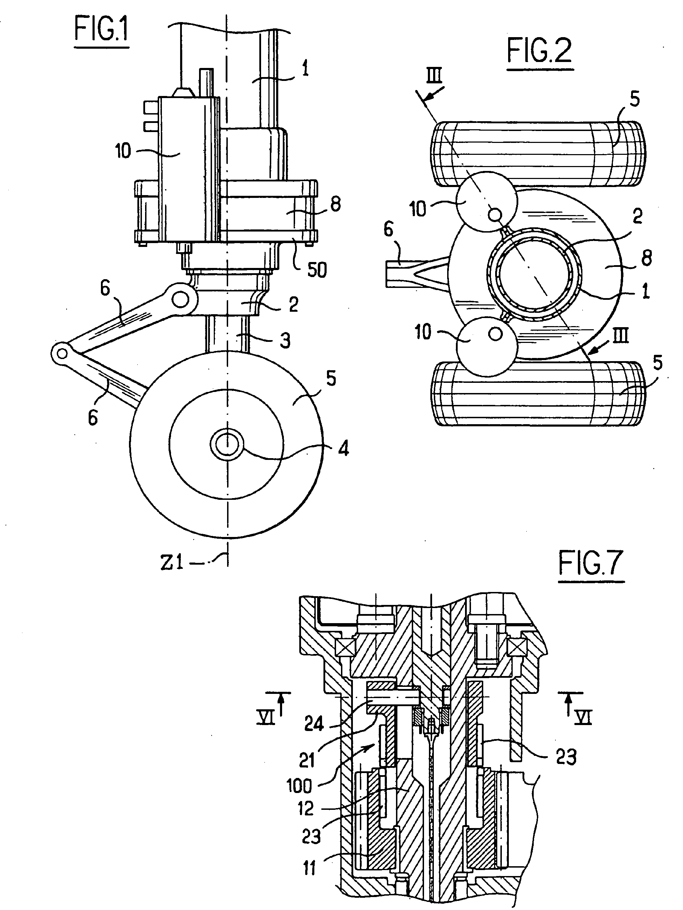

En référence aux figures 1 et 2, et conformément à un mode particulier de réalisation de l'invention, l'atterrisseur illustré comporte un caisson 1 dans lequel un tube tournant 2 est monté pour tourner selon un axe longitudinal Z1. Un amortisseur télescopique 3 s'étend intérieurement au tube tournant 2. La partie inférieure de l'amortisseur s'étend en saillie du tube 2 et porte un essieu 4 recevant des roues 5. Des compas 6 s'étendent entre le tube 2 et l'amortisseur 3 pour lier en rotation le tube 2 et l'amortisseur 3, tout en permettant à l'amortisseur de s'enfoncer librement dans le caisson 2 selon l'axe Z1.

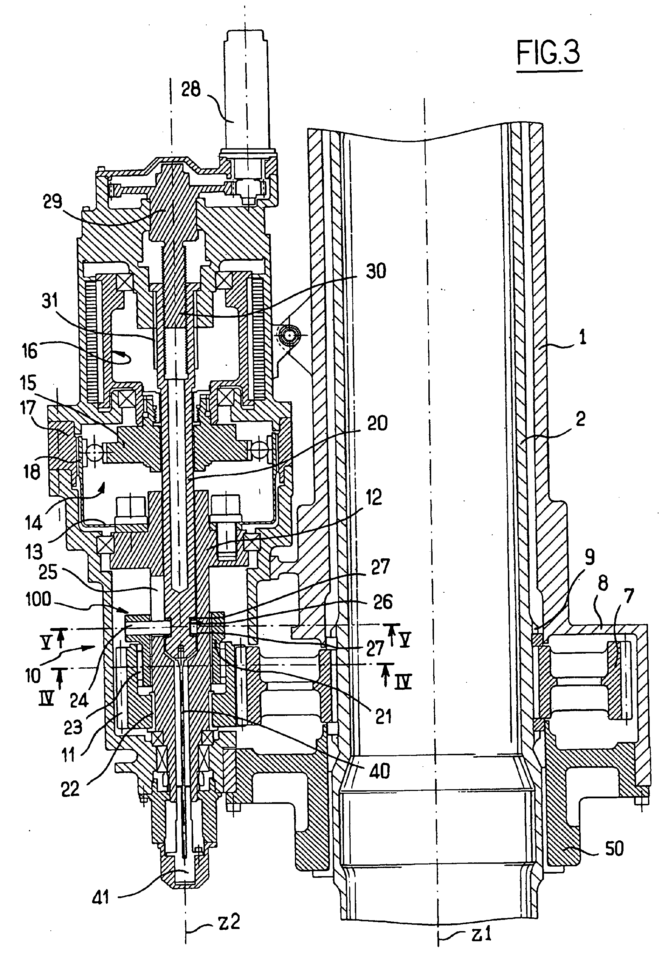

Le tube 2 porte à son extrémité inférieure une roue dentée 7 (visible à la figure 3) qui est logée dans un logement 8 du caisson 1 et qui est rendue solidaire en rotation du tube tournant 2 par des cannelures 9.

Selon l'invention, l'atterrisseur est équipé de deux actionneurs électromécaniques d'orientation 10 modulaires adaptés à coopérer avec la roue dentée 7 pour faire tourner le tube 2, et donc les roues 5 par l'intermédiaire des compas 6. Ici, les actionneurs électromécaniques d'orientation 10 forment des modules unitaires et sont rapportés sur le logement 8 du caisson 1 de façon à pouvoir en être facilement démontés, sans que ce démontage nécessite de démonter un autre actionneur électromécanique d'orientation ou toute autre partie structurale de l'atterrisseur.

En référence à la figure 3, la roue dentée 7 est attaquée par un pignon de sortie 11 de l'actionneur électromécanique d'orientation monté pour tourner sur l'actionneur électromécanique d'orientation selon un axe Z2 parallèle à l'axe Z1 de l'atterrisseur. Le pignon 11 est relié à un entraîneur 12 par un organe d'accouplement commandable 100 qui sera détaillé plus loin. L'entraîneur 12 est solidaire de l'organe de sortie 13 d'un réducteur 14 du type de celui illustré dans le document US 2 906 143, c'est-à-dire comportant une paroi circulaire déformable 18 portant sur sa face externe des dents qui coopèrent avec des dents en regard d'une couronne 17, en nombre légèrement plus important. La coopération des dents de l'organe de sortie 13 et de la couronne 17 est assurée par déformation de la paroi circulaire 18 provoquée par l'organe d'entrée 15 du réducteur, forçant la coopération des dents en deux portions diamétralement opposées. On remarquera que la couronne 17 forme ici une partie du boîtier de l'actionneur électromécanique d'orientation. Le reste du réducteur est bien connu en soi et ne forme pas l'objet de l'invention en tant que tel.

L'organe d'entrée 15 du réducteur 14 est entraîné en rotation du rotor par un moteur électrique principal 16. Ainsi, dans l'hypothèse où l'organe d'accouplement met en liaison mécanique le moteur électrique principal 16 et le pignon de sortie 11, une rotation commandée du moteur électrique principal 16 provoque la rotation du pignon 11 via le réducteur 14 et, partant provoque la rotation de la roue dentée 7.

L'organe d'accouplement 100 est maintenant décrit en détail.

Le pignon de sortie 11 est monté librement tournant sur l'entraîneur 12. L'organe d'accouplement 100 comporte un crabot 21 qui est mobile axialement sur l'entraîneur 12 entre une position crabotée (illustrée ici) dans laquelle le crabot 21 s'étend entre le pignon de sortie 11 et l'entraîneur 12 pour les solidariser en rotation et une position décrabotée visible à la figure 7 dans laquelle le crabot libère le pignon de sortie 11 de sorte que celui-ci est libre de tourner sur l'entraîneur 12.

Ainsi, lorsque le crabot 21 est en position crabotée, le moteur électrique principal 16 est en liaison mécanique avec le pignon de sortie 7 de sorte que l'actionneur électromécanique d'orientation est accouplé à la roue dentée 7 et peut provoquer la rotation des roues de l'atterrisseur, tandis que lorsque le crabot 21 est en position décrabotée, le moteur électrique principal 16 n'est plus en liaison mécanique avec le pignon de sortie 11 de sorte que l'actionneur électromécanique d'orientation n'est plus accouplé à la roue dentée 7 et ne peut donc provoquer la rotation des roues de l'atterrisseur.

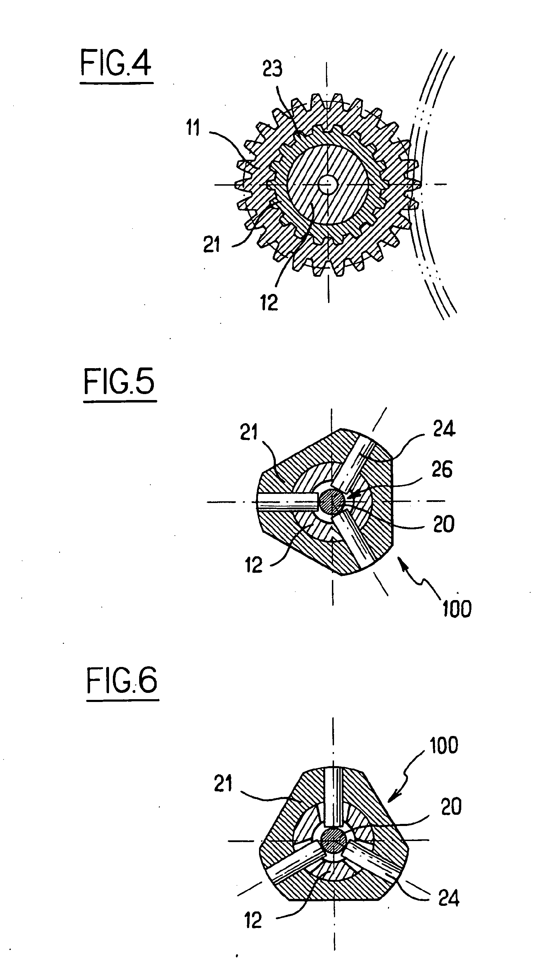

Comme cela est visible à la figure 4, le crabot 21 et le pignon de sortie 11 présentent des cannelures 23 homologues qui permettent, lorsque le crabot 21 est en position de crabotage, de lier en rotation le crabot 21 et le pignon de sortie 11. Par ailleurs, le crabot 21 est lié en rotation à l'entraîneur 12 au moyen de doigts 24 solidaires du crabot 21 et qui s'étendent au travers de lumières oblongues 25 ménagées dans la paroi de l'entraîneur 12 pour déboucher dans une cavité centrale de celui-ci, comme cela est particulièrement visible à la figure 5.

Comme cela est visible à la figure 5, l'extrémité des doigts 24 est reçue dans une gorge 26 ménagée à l'extrémité d'une tige de commande 20 de l'organe d'accouplement 100 qui s'étend dans l'orifice central de l'entraîneur 12 selon l'axe Z2. Sur les flancs de la gorge 26 sont disposées des rondelles de glissement 27. Un déplacement axial de la tige de commande 20 provoque un déplacement axial correspondant du crabot 21.

La tige de commande 20 est déplacée axialement par l'intermédiaire d'un moteur électrique auxiliaire 28 qui est agencé pour faire tourner dans un sens ou dans l'autre une roue de commande 29 montée rotative sur l'actionneur électromécanique d'orientation selon l'axe Z2 et comportant une extrémité filetée 30 qui coopère avec un taraudage homologue de la tige de commande 20. La liaison hélicoïdale ainsi organisée entre la roue de commande 29 et la tige de commande 20 permet, en faisant tourner le moteur électrique auxiliaire 28 de faire monter ou descendre la tige de commande 20, et, partant, le crabot 21. La tige de commande 20 est empêchée de tourner par des cannelures 31 coopérant avec des cannelures homologues du corps de l'actionneur.

Comme cela est visible à la figure 6, lorsque le crabot 21 est en position décrabotée, les lumières oblongues ne sont plus ajustées à la largeur des doigts 24 mais sont légèrement plus larges de sorte que les doigts 24, et donc le crabot 21 ont une petite liberté de rotation sur l'entraîneur 12, ce qui facilite l'engagement des cannelures 23 lors du retour du crabot 21 vers la position crabotée.

Pour déterminer l'état de l'organe d'accouplement 100, une aiguille indicatrice 40 est fixée en extrémité de la tige de commande 20 et forme le noyau d'un capteur de position inductif de type LVDT 41 dont le signal de sortie varie selon la position axiale dé l'aiguille 40, et donc du crabot 21, de sorte qu'il est possible de détecter si le crabot 21 est en position crabotée ou décrabotée.

On remarquera que lorsque le crabot 21 est en position décrabotée, une rotation intentionnelle ou accidentelle du moteur électrique principal 16 ne peut provoquer de crabotage intempestif, de sorte que l'état décraboté est stable. De même, lorsque le crabot 21 est en position crabotée, une rotation intentionnelle ou accidentelle du moteur électrique 16 ne peut provoquer de décrabotage intempestif, de sorte que l'état craboté est stable également.

Une difficulté survient si les cannelures du crabot 21 s'étendent, lors du crabotage, en regard des cannelures du pignon de sortie 11. Pour éviter la détérioration des cannelures, il convient d'arrêter rapidement le moteur 28 pour éviter de faire subir aux cannelures en regard une pression trop importante.

On fait alors tourner le moteur 28 en sens inverse pour dégager le crabot 21 du pignon de sortie 11, et on fait tourner le pignon de sortie 11 au moyen de l'autre actionneur électromécanique d'orientation qui, en faisant tourner le roue dentée 7, fait tourner le pignon de sortie 11 de l'actionneur décraboté. Ainsi, les cannelures du crabot 21 et du pignon de sortie 11 ne sont plus en regard l'une de l'autre, et le crabot 21 peut pénétrer facilement dans le pignon de sortie 11.

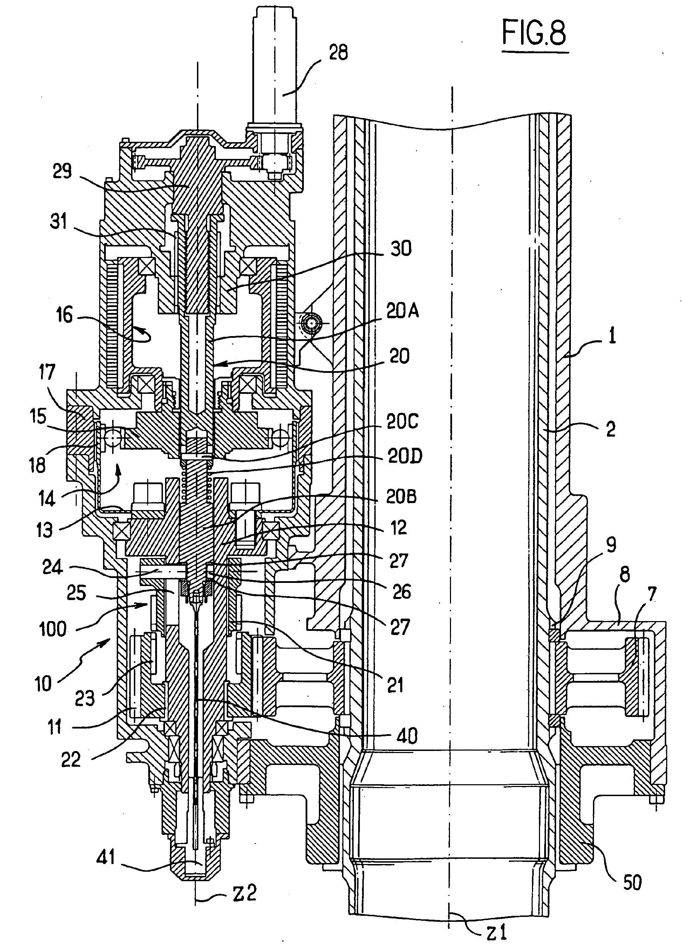

Selon une variante illustrée à la figure 8, la tige de commande 20 n'est plus liée axialement au crabot 21 de façon directe. La tige 20 est ici divisée en deux éléments 20A et 20B qui sont mobiles axialement entre eux de sorte que la tige 20 peut être raccourcie. A cet effet, l'élément 20B comporte une goupille 20C qui est engagée dans des lumières de l'élément 20A, un ressort 20D maintenant les deux éléments 20A et 20B en position écartée.

Ici, l'actionneur est illustré alors que le crabot 21 est en position décrabotée.

Lors du crabotage, la rotation du moteur 28 provoque la rotation de la roue de commande, et donc le déplacement axial de la tige 20 et du crabot 21. Si les cannelures du crabot 21 sont en regard des cannelures du pignon de sortie 11, le crabot 21 ne peut s'enfoncer dans le pignon de sortie 11. Le crabot 21 et l'élément 20B sont immobilisés axialement, ce qui est facilement repérable au moyen du capteur 41, alors que l'élément 20A continue à se déplacer axialement sous l'effet de la rotation du moteur 28.

Le ressort 20D permet d'absorber cette différence de mouvement axial entre les éléments 20A et 20B, en évitant d'imposer aux cannelures un effort de pression important qui pourrait provoquer leur matage, voire leur détérioration.

Dans cette situation, il suffit de faire tourner le moteur 28 dans l'autre sens pour dégager le crabot 21 du pignon de sortie 11, et de faire tourner légèrement ce dernier au moyen de l'autre actionneur électromécanique d'orientation qui, en faisant tourner la roue dentée 7, provoque la rotation du pignon de sortie 11 de l'actionneur décraboté. Ainsi, les cannelures du crabot 21 et du pignon de sortie 11 ne sont plus en regard l'une de l'autre, et le crabot 21 peut pénétrer facilement dans le pignon de sortie 11.

L'utilisation de tels actionneurs électromécaniques d'orientation présente plusieurs avantages:
- en fonctionnement normal, les deux actionneurs électromécaniques d'orientation travaillent en parallèle conférant à la commande d'orientation une rapidité de réaction appréciable;
- si l'un des actionneurs électromécaniques d'orientation 10 tombe en panne, celui-ci peut être désaccouplé, ce qui permet d'éviter un blocage en rotation du tube 2 en cas de blocage en rotation de l'actionneur électromécanique d'orientation défaillant. Dès lors, et à condition que chacun des actionneurs électromécaniques d'orientation ait une puissance suffisante pour assurer seul la commande d'orientation, l'orientation peut encore être assurée au moyen de l'actionneur électromécanique d'orientation valide, au prix bien sûr de performances d'orientation moindres;
- La possibilité de désaccouplement permet de tester les actionneurs électromécaniques d'orientation après la sortie de l'atterrisseur, avant l'atterrissage. En effet, pour tester le moteur de chacun des actionneurs électromagnétiques d'orientation, il suffit au préalable de commander le désaccouplement, de faire tourner le moteur principal correspondant. Le moteur doit tourner facilement en étant alimenté par un faible courant, puisqu'il n'est plus relié à la roue dentée 7. Puis pour tester l'organe d'accouplement, il suffit de commander l'accouplement et de vérifier que le moteur nécessite pour tourner un courant plus important correspondant à la résistance attendue du fait de l'accouplement;
- la possibilité de désaccouplement permet l'utilisation de forts rapports de réduction qui présentent l'avantage d'utiliser des moteurs plus petits mais rendent les actionneurs irréversibles. Cet inconvénient lié à l'irréversibilité, qui risque de bloquer toute la commande d'orientation en cas de défaillance de l'un des actionneurs, est ici neutralisé par la possibilité de désaccouplement. Il sera alors avantageux de prévoir une possibilité de commande du désaccouplement par le personnel au sol afin que celui-ci puisse effectuer le remorquage de l'aéronef sans endommager les actionneurs électromécaniques d'orientation;
- la disposition des actionneurs électromécaniques d'orientation selon l'invention permet de mettre en oeuvre une maintenance de type LRU (ou line repleacable unit), qui consiste à identifier l'actionneur électromécanique d'orientation défaillant, et remplacer l'actionneur électromécanique d'orientation défaillant et uniquement celui-là par un nouvel actionneur électromécanique d'orientation. Ici, il suffit de débrancher les divers câbles électriques, de retirer les vis de fixation de l'actionneur électromécanique d'orientation et d'éloigner radialement l'actionneur électromécanique d'orientation de l'atterrisseur, sans démonter un autre actionneur électromécanique d'orientation ou toute autre partie structurale de l'atterrisseur;
- les actionneurs électromécaniques d'orientation permettent ici par leur coopération avec la roue dentée 7 une orientation de la partie inférieure selon 360 degrés, sans limitation de course angulaire.

Selon un aspect particulier de l'invention visible à la figure 3, le logement 8 du bas du caisson 1 est fermé par un couvercle 50 qui forme en même temps un palier pour le tube tournant 2. Cette disposition permet de dégager totalement l'accès à la roue dentée 7 qui est prévue amovible sur le tube tournant 2 et qui peut ainsi être remplacée. Cette disposition permet de limiter le diamètre du tube tournant au droit du palier à une valeur légèrement plus importante que le diamètre extérieur des cannelures 9, de sorte que le tube tournant a une forme simple.

L'invention n'est pas limitée à ce qui vient d'être décrit, mais bien au contraire englobe toute variante entrant dans le cadre défini par les revendications.

En particulier, bien que l'on ait illustré un atterrisseur équipé de deux actionneurs électromécaniques modulaires d'orientation, on pourra équiper l'atterrisseur d'un nombre plus important d'actionneurs électromécaniques modulaires d'orientation. On peut ainsi disposer d'un actionneur électromécanique modulaire d'orientation dimensionné de sorte que l'utilisation de deux d'entre eux répondent aux besoins d'un aéronef de type A320, et, pour des aéronefs plus importants de type A340 ou A380, utiliser le même type d'actionneur électromécanique d'orientation mais en nombre plus important pour faire face au couple d'orientation plus important.

Enfin, bien que l'agencement préféré des actionneurs électromécaniques d'orientation de l'invention soit sous forme modulaire rapportée de façon démontable sur l'atterrisseur, l'invention couvre également un atterrisseur comportant des actionneurs électromécaniques d'orientation selon l'invention intégrés à l'atterrisseur.

## Revendications

1. Atterrisseur d'aéronef comportant une partie inférieure orientable (4,5) et un organe d'orientation pour faire tourner la partie inférieure orientable en réponse à un ordre d'orientation, l'organe d'orientation comportant une pluralité d'actionneurs électromécaniques d'orientation (10) qui comportent chacun au moins un moteur électrique principal (16) et qui sont disposés sur l'atterrisseur pour coopérer tous simultanément avec la partie inférieure orientable en vue d'en provoquer son orientation, **caractérisé en ce que** chacun des actionneurs électromécaniques comporte des moyens d'accouplement commandables pour placer sélectivement l'actionneur :
- soit dans un état accouplé avec la partie inférieure orientable dans lequel l'actionneur est apte à faire tourner la partie inférieure orientable, et dans lequel le au moins un moteur électrique principal est en liaison mécanique avec la partie inférieure orientable de sorte qu'une rotation du au moins un moteur électrique principal provoque une rotation de la partie inférieure orientable ;
- soit dans un état désaccouplé dans lequel l'actionneur est inapte à faire tourner la partie inférieure orientable, et dans lequel le au moins un moteur électrique principal est isolé de la partie inférieure orientable.

2. Atterrisseur selon la revendication 1, dans lequel chacun des actionneurs électromécaniques d'orientation (10) comporte un pignon de sortie (11) entraîné en rotation par le moteur électrique principal (16) associé lorsque l'actionneur est dans l'état accouplé, les pignons de sortie de tous les actionneurs électromécaniques d'orientation coopérant avec une même roue dentée (7) solidaire de la partie inférieure orientable de l'atterrisseur.

3. Atterrisseur selon la revendication 2, dans lequel les moyens d'accouplement sont agencés pour établir ou rompre une liaison mécanique en rotation entre le pignon de sortie (11) et le moteur électrique principal (16).

4. Atterrisseur selon la revendication 3, dans lequel chaque actionneur électromécanique d'orientation comporte un réducteur (14) disposé entre le moteur principal (16) et le pignon de sortie (11), les moyens d'accouplement étant disposés entre le pignon de sortie (11) et un organe de sortie du réducteur (14).

5. Atterrisseur selon la revendication 4, dans lequel le réducteur est du type à paroi circulaire déformable (18).

6. Atterrisseur selon la revendication 1, dans lequel chacun des actionneurs électromécaniques d'orientation est modulaire et est rapporté de façon démontable sur l'atterrisseur.

7. Atterrisseur selon la revendication 6, dans lequel les actionneurs électromécaniques d'orientation sont disposés sur l'atterrisseur et agencés de sorte que le démontage d'un actionneur électromécanique d'orientation soit possible sans démontage d'un autre actionneur électromécanique d'orientation ou d'une partie structurelle de l'atterrisseur.

8. Procédé de test d'un atterrisseur selon la revendication 1, dans lequel on place l'un des actionneurs électromécaniques d'orientation dans l'état désaccouplé, et on alimente son moteur électrique principal (16) pour vérifier s'il tourne sous un faible courant électrique.

9. Procédé selon la revendication 8, mis en oeuvre alors que l'atterrisseur est monté sur un aéronef.

## Claims

1. An aircraft undercarriage including a steerable bottom portion (4, 5) and a steering member for turning the steerable bottom portion in response to a steering order, the steering member comprising a plurality of electromechanical steering actuators (10) each comprising at least one main electric motor (16), said steering actuators being disposed on the undercarriage so as to enable all of them to co-operate simultaneously with the steerable bottom portion in order to steer it, **characterized in that** each of the electromechanical steering actuators includes controllable coupling means for selectively placing the actuator:
• either in a coupled state in which the steering actuator is coupled to the steerable bottom portion and can make the steerable bottom portion turn, and in which said at least one main electric motor is mechanically linked to the steerable bottom portion so that a rotation of said at least one electric motor causes a rotation of the steerable member portion.
• else in a uncoupled state in which the steering actuator cannot make the steerable bottom portion turn, and in which said at least one main electric motor is isolated from said steerable bottom portion.

2. An undercarriage according to claim 1, in which each of the electromechanical steering actuators (10) includes an outlet pinion (11) rotated by the associated main electric motor (16) when the actuator is in the coupled state, the outlet pinions of all of the electromechanical steering actuators co-operating with a common toothed ring (7) secured to the steerable bottom portion of the undercarriage.

3. An undercarriage according to claim 2, in which the coupling means are arranged to make or break a rotary mechanical connection between the outlet pinion (11) and the main electric motor (16).

4. An undercarriage according to claim 3, in which each electromechanical steering actuator includes a gearbox (14) disposed between the main motor (16) and the outlet pinion (11), the coupling means being disposed between the outlet pinion (11) and an outlet member of the gearbox (14).

5. An undercarriage according to claim 4, in which the gearbox is of the type having a deformable circular wall (18).

6. An undercarriage according to claim 1, in which each of the electromechanical steering actuators is modular and can be separably fitted to the undercarriage.

7. An undercarriage according to claim 6, in which the electromechanical steering actuators are disposed on the undercarriage and arranged in such a manner that it is possible to remove an electromechanical steering actuator without removing any other electromechanical steering actuator or any structural portion of the undercarriage.

8. A method of testing an undercarriage according to claim 1, in which one of the electromechanical steering actuators is placed in the uncoupled state and its main electric motor (16) is powered in order to verify that it rotates while drawing little electric current.

9. A method according to claim 8, implemented while the undercarriage is mounted on an aircraft.

## Patentansprüche

1. Flugzeug-Fahrwerk, umfassend einen ausrichtbaren unteren Abschnitt (4, 5) und eine Ausrichtvorrichtung zum Drehen des ausrichtbaren unteren Abschnitts in Antwort auf einen Ausrichtbefehl, wobei die Ausrichtvorrichtung eine Vielzahl von elektromechanischen Ausrichtaktuatoren (10) umfasst, die jeweils mindestens einen Hauptelektromotor (16) umfassen und an dem Fahrwerk so angeordnet sind, dass sie alle gleichzeitig mit dem ausrichtbaren unteren Abschnitt zusammenwirken, um dessen Ausrichtung zu bewirken, **dadurch gekennzeichnet, dass** jeder der elektromechanischen Aktuatoren steuerbare Kopplungsmittel umfasst, um den Aktuator selektiv zu versetzen:
- entweder in einen mit dem ausrichtbaren unteren Abschnitt gekoppelten Zustand, in dem der Aktuator dazu geeignet ist, den ausrichtbaren unteren Abschnitt zu drehen, und in dem der mindestens eine Hauptelektromotor in mechanischer Verbindung mit dem ausrichtbaren unteren Abschnitt steht, derart, dass eine Drehung des mindestens einen Hauptelektromotors eine Drehung des ausrichtbaren unteren Abschnitts verursacht,
- oder in einen entkoppelten Zustand, in dem der Aktuator nicht dazu geeignet ist, den ausrichtbaren unteren Abschnitt zu drehen, und in dem der mindestens eine Hauptelektromotor von dem ausrichtbaren unteren Abschnitt abgetrennt ist.

2. Fahrwerk nach Anspruch 1, wobei jeder der elektromechanischen Ausrichtaktuatoren (10) ein Abtriebsritzel (11) umfasst, das von dem dazugehörigen Hauptelektromotor (16) in Drehrichtung angetrieben wird, wenn der Aktuator in dem gekoppelten Zustand ist, wobei die Abtriebsritzel aller elektromechanischen Ausrichtaktuatoren mit ein und demselben Zahnrad (7) zusammenwirken, das fest mit dem ausrichtbaren unteren Abschnitt des Fahrwerks verbunden ist.

3. Fahrwerk nach Anspruch 2, wobei die Kopplungsmittel derart angeordnet sind, dass sie eine mechanische drehfeste Verbindung zwischen dem Abtriebsritzel (11) und dem Hauptelektromotor (16) herstellen oder unterbrechen.

4. Fahrwerk nach Anspruch 3, wobei jeder elektromechanische Ausrichtaktuator ein Untersetzungsgetriebe (14) umfasst, das zwischen dem Hauptmotor (16) und dem Abtriebsritzel (11) angeordnet ist, wobei die Kopplungsmittel zwischen dem Abtriebsritzel (11) und einem Abtriebselement des Untersetzungsgetriebes (14) angeordnet sind.

5. Fahrwerk nach Anspruch 4, wobei das Untersetzungsgetriebe vom Typ mit kreisförmiger verformbarer Wand (18) ist.

6. Fahrwerk nach Anspruch 1, wobei jeder der elektromechanischen Ausrichtaktuatoren modular und auf abnehmbare Weise an dem Fahrwerk befestigt ist.

7. Fahrwerk nach Anspruch 6, wobei die elektromechanischen Ausrichtaktuatoren an dem Fahrwerk angeordnet und so ausgebildet sind, dass die Demontage eines elektromechanischen Ausrichtaktuators ohne Demontage eines anderen elektromechanischen Ausrichtaktuators oder eines Strukturabschnittes des Fahrwerks möglich ist.

8. Testverfahren für ein Fahrwerk nach Anspruch 1, wobei man einen der elektromechanischen Ausrichtaktuatoren in den entkoppelten Zustand versetzt und man seinen Hauptelektromotor (16) speist, um zu prüfen, ob er sich unter einem Strom geringer Stärke dreht.

9. Verfahren nach Anspruch 8, wobei es angewandt wird, während das Fahrwerk an einem Flugzeug montiert ist.
